# FASCICULE DE BREVET EUROPEEN

(11) **EP 2 007 190 B1**
(45) Date de publication et mention de la délivrance du brevet: **03.02.2016**
(21) Numéro de dépôt: 07731271.8
(22) Date de dépôt: 10.04.2007
(51) Int. Cl.: A01J 25/13, A01J 25/12

(54) **PROCEDE DE FABRICATION EN CONTINU DE TRANCHES DE FROMAGE**
VERFAHREN ZUR KONTINUIERLICHEN HERSTELLUNG VON KÄSESCHEIBEN
METHOD FOR THE CONTINUOUS MANUFACTURE OF CHEESE SLICES

(30) Priorité: 19.04.2006 FR 0603459
(43) Date de publication de la demande: 31.12.2008
(73) Titulaire: Fromageries Bel, 75008 Paris (FR)
(72) Inventeur: QUESTE, Dominique, 21110 Genlis (FR)
(74) Mandataire: Jacobson, Claude
(86) Numéro de dépôt international: PCT/FR2007/000600
(87) Numéro de publication internationale: WO 2007/122311

(56) Documents cités:
- EP-A2- 1 310 159
- WO-A-2005/122802
- DE-A1- 4 423 988
- FR-A- 2 754 976

## Description

La présente invention est relative à la fabrication de fromages en tranche ayant des qualités organoleptiques proches des qualités organoleptiques des fromages naturels, et présentant des motifs en relief ou en creux.

On connaît les tranches de fromage réalisées à partir de fromages naturels. Ces tranches de fromage sont obtenues par tranchage de meules ou de pains de fromage, principalement à pâte pressée, mais également à pâte molle, éventuellement issus de fromage frais. Pour réaliser ces tranches de fromage, on écroûte les pains de fromage, puis on les découpe en tranche de dimension souhaitée. Dans le procédé, la coupe des tranches se fait en général en utilisant des équipements comportant des lames ou des fils d'acier mis en mouvement par des moyens mécaniques ou par des vérins hydrauliques. On peut utiliser également des dispositifs de découpe par ultrason ou par laser.

Ce procédé présente plusieurs inconvénients.

Tout d'abord, il manque de flexibilité puisque la dimension des tranches est liée à la dimension initiale du pain de fromage ou de la meule de fromage, la seule variable d'ajustement disponible étant l'épaisseur.

Ensuite, il ne permet pas de fabriquer des tranches ayant des motifs en relief.

Ce procédé engendre également des chutes de produits importantes, notamment au voisinage du talon des pains de fromage, qui entraînent des pertes pouvant atteindre 20% de la matière de départ, voire plus lorsque la découpe est faite afin d'obtenir des tranches ayant des formes particulières telles que des formes de fleurs ou des formes d'animaux.

En outre, lorsque le fromage d'origine est un fromage du type présentant des ouvertures, tels que de l'emmental, du gruyère ou du Maasdam, les tranches obtenues sont de grammage variable du fait de la répartition non régulière des ouvertures et de l'irrégularité de la taille de ces dernières dans le fromage à découper.

De plus, dans la mesure où l'on souhaite avoir des tranches de fromages à ouvertures présentant dans la pâte des ingrédients aromatiques sous forme d'éléments figurés, deux difficultés majeures apparaissent :
- si on incorpore ces éléments figurés dans le lait de fabrication une partie est évacuée dans le lactosérum avec les conséquences sur l'aspect visuel et les qualités organoleptiques du produit final et des difficultés pour l'utilisation ultérieure du lactosérum qui contient une partie de ces éléments.
- les éléments figurés sont des agents facilitateurs « d'ouvertures » par création de zones de rupture dans la pâte mais cela peut entraîner, selon le nombre d'éléments figurés présents dans la pâte, la formation de fromages présentant une multitude d'ouvertures, ce qui n'est pas toujours souhaitable.

De WO 2005/122802 A1, on connaît également des tranches obtenues à partir d'un fromage fondu, réalisées soit par découpe de blocs de fromage fondu ferme selon les mêmes techniques que celles qui ont été décrites ci-dessus, soit par des techniques consistant à réaliser des rubans de fromage fondu et à découper dans ces rubans des tranches de forme adaptée, par exemple par poinçonnage.

Ces techniques, comme les précédentes, présentent l'inconvénient de ne pas permettre de réaliser des tranches avec des motifs en relief ou en creux sans étape supplémentaire d'estampage ou de pressage des tranches dans une empreinte présentant les motifs que l'on cherche à réaliser.

En outre, pour obtenir des tranches présentant des ouvertures dans la pâte, il est nécessaire de partir de fromages d'origine présentant déjà des ouvertures à l'intérieur de la pâte, tels que le Maasdam, l'emmental ou le gruyère. Ceci exclue de réaliser des tranches de fromage présentant des ouvertures en partant d'une matière première correspondant à un fromage fondu.

Par ailleurs, les tranches de fromage fondu que l'on connaît ont des caractéristiques organoleptiques relativement éloignées de celles des fromages naturels. Il en résulte que les caractéristiques de goût et de texture sont assez différentes.

Le but de la présente invention est de remédier à ces inconvénients en proposant un procédé de fabrication de tranches de fromage à ouvertures régulières (taille et forme) qui présente les avantages des techniques de fabrication de tranches de fromage à partir de fromage fondu, tout en permettant de réaliser des tranches ayant des motifs en creux qui peuvent être des ouvertures, qui peuvent avoir des caractéristiques organoleptiques proches de celles de fromages naturels et dans lesquels des ingrédients organoleptiques figurés peuvent avoir été ajoutés à la pâte.

A cet effet, l'invention a pour objet un procédé pour fabriquer du fromage en tranche, selon lequel on prépare une pâte de fromage malléable, on injecte la pâte de fromage malléable sur un dispositif de moulage mobile comportant à sa surface au moins une empreinte de moulage en creux comprenant au moins un plot en saillie, on racle la pâte de fromage à la surface de l'au moins une empreinte, de façon à former une tranche ou une bande comportant au moins un motif en creux pouvant être une ouverture, on fait durcir la tranche ou la bande et on l'éjecte du dispositif de moulage avant de la conditionner.

De préférence, la pâte de fromage malléable est chaude et, afin de durcir la tranche avant de la conditionner, on la refroidit jusqu'à une température inférieure à 30°C, le refroidissement étant réalisé, au moins partiellement, lorsque la tranche est encore sur le dispositif de moulage, et étant terminé, éventuellement, pendant qu'on transporte la tranche de fromage pour la conditionner après l'avoir éjectée du dispositif de moulage.

Le refroidissement est effectué, par exemple, par au moins un des moyens consistant à refroidir la paroi du dispositif de moulage en contact avec la tranche de fromage par circulation d'un fluide de refroidissement, à souffler depuis l'extérieur du dispositif de moulage un gaz froid tel que de l'air froid ou à faire circuler la tranche de fromage dans un tunnel de refroidissement.

Le dispositif de moulage est, par exemple, un tambour rotatif comportant à sa surface au moins une alvéole constituant une empreinte en creux en forme de tranche généralement rectangulaire ou ronde, comportant au moins un plot en relief.

De préférence le procédé est continu et le dispositif de moulage comporte une pluralité d'alvéoles identiques ou différentes.

Le dispositif de moulage peut également être un tambour rotatif dont l'empreinte de moulage est une empreinte en creux annulaire s'étendant sur toute la circonférence du tambour et dont la surface comprend des plots en saillie. Le fromage est alors formé sous forme de bande qu'on peut découper transversalement et éventuellement longitudinalement pour former des tranches généralement rectangulaires.

De préférence, la pâte de fromage malléable est injectée à l'aide d'une vis doseuse.

On peut conditionner la tranche de fromage en la disposant dans un récipient adapté tel qu'une barquette ou un sachet, éventuellement après l'avoir emballée individuellement.

Pour préparer la pâte de fromage malléable, on peut effectuer un traitement thermique et mécanique modéré du type pétrissage à une température comprise entre 30°C et 85°C, de préférence comprise entre 45°C et 65°C, d'une charge constituée d'au moins un fromage naturel divisé en brins ou morceaux, éventuellement d'eau et éventuellement d'une ou plusieurs matières premières complémentaires, l'eau et les matières premières complémentaires étant ajoutés avant ou pendant le traitement thermique et mécanique, puis refroidir la pâte à une température comprise entre 30°C et 55°C.

La quantité d'eau ajoutée est de préférence inférieure à 20%, et de préférence supérieure à 7% en poids de la quantité de fromage naturel utilisée.

Les éventuelles matières premières complémentaires peuvent être prises parmi les matières premières suivantes avec les propositions suivantes, en poids par rapport au poids de fromage naturels : concentré de protéines laitières, moins de 10% ; poudres de lait ou de lactosérum, moins de 10% ; caillés de fromages non affinés, jusqu'à 40% et, de préférence plus de 10% ; fromage fondu, jusqu'à 40% et de préférence plus de 10%, matières grasses d'origine laitière ou végétale, jusqu'à 60% et de préférence plus de 5% ; les concentrés et poudres de lait ou de lactosérum pouvant être apportés sous forme de concentrés fermentés.

Ces matières premières peuvent également être des ingrédients aromatiques sous forme d'éléments figurés tels que des grains de cumin, des brisures de noix, de noisettes, des herbes aromatiques, etc.

De préférence, le traitement thermique et mécanique est fait par chauffage par injection directe de vapeur à une vitesse de chauffage comprise entre 0,2°C/s et 0,6°C/s et le traitement mécanique est fait par cisaillement dans un dispositif du type cutter tournant à la vitesse comprise entre 350 tours/minute et 650 tours/minute.

L'invention concerne également un produit fromager obtenu par traitement thermique au dessous de 85°C et pétrissage d'une matière première fromagère constituée d'un ou plusieurs fromages naturels broyés, éventuellement additionnés d'au plus 20% en poids d'eau, d'au plus 10% en poids de protéines laitières, d'au plus 10% en poids de poudre de lait et/ou de lactosérum, d'au plus 40% en poids de caillés de fromage non affiné, d'au plus 40% en poids de fromage fondu, d'au plus 50% de matières grasses d'origine laitière ou végétale, les pourcentages en poids des matières ajoutées étant déterminées par rapport au poids de fromages naturels broyés, qui se présente sous forme de tranches comportant au moins un motif en creux ou sous forme d'ouverture.

Le produit fromager contient également des ingrédients aromatiques sous forme d'éléments figurés.

L'invention concerne enfin un dispositif pour la mise en oeuvre du procédé selon l'invention. Ce dispositif comprend un dispositif de moulage constitué d'un tambour de moulage entraîné en rotation dont la surface comporte au moins une empreinte de moulage, d'au moins un moyen de refroidissement associé au tambour de moulage, d'un moyen d'injection de pâte malléable débouchant en regard de la surface du tambour de moulage de façon à pouvoir alimenter en pâte malléable la ou les empreintes prévues à la surface du tambour de moulage, de moyens de raclage de la surface du tambour du moulage et de moyens d'extraction et de transport des tranches ou bandes de fromage vers une zone de conditionnement. L'empreinte de moulage comporte au moins une empreinte en relief tel qu'un plot pour réaliser sur la tranche de fromage au moins un motif en creux pouvant être une ouverture.

De préférence, le moyen d'injection de pâte malléable comporte une vis doseuse.

Un moyen de refroidissement associé au tambour de moulage peut comprendre une circulation de fluide de refroidissement tel que de l'eau glacée circulant dans le tambour au voisinage de la surface.

Un moyen de refroidissement associé au tambour de moulage peut être un soufflage d'un gaz froid tel que de l'air froid sur la surface extérieure du tambour de moulage.

Les moyens d'extraction et de transport des tranches ou de la bande de fromage vers une zone de conditionnement comprennent par exemple un tambour d'extraction rotatif parallèle au tambour de moulage, dont la surface externe est tangente à l'enveloppe externe du cylindre de moulage, entraîné en rotation en sens inverse du sens de rotation du tambour de moulage, le tambour d'extraction comportant des moyens tels que des moyens d'aspiration, pour détacher les tranches ou de la bande de fromage de la surface du tambour de moulage, pour maintenir les tranches ou de la bande de fromage sur le tambour d'extraction et pour éjecter les tranches ou de la bande en regard de la zone de conditionnement.

De préférence, le dispositif comprend un moyen de refroidissement, par exemple du type soufflage de gaz froid, associé au tambour d'extraction.

Dans un autre mode de réalisation, le moyen d'extraction et de transport des tranches de fromages vers une zone de conditionnement peut comprendre un tapis roulant disposé sous le tambour de moulage et il est prévu un moyen pour détacher les tranches ou la bande de fromage du tambour de moulage au droit du tapis roulant, le moyen étant par exemple un racloir ou un soufflage d'air comprimé dans le fond des empreintes du cylindre de moulage.

Un moyen de refroidissement peut être associé au moyen d'extraction et de transport, ledit moyen de refroidissement étant, par exemple, un tunnel réfrigérant dans lequel le tapis roulant circule, ou un moyen de réfrigération disposé sous le tapis roulant.

Dans un mode de réalisation, les empreintes de moulage peuvent être des alvéoles ayant la forme de tranches de fromage.

Dans un autre mode de réalisation, l'empreinte de moulage s'étend sur toute la périphérie du tambour de façon à pouvoir mouler en continu une bande de fromage, et le dispositif comprend des moyens de découpe transversale et éventuellement longitudinale de la bande de fromage de façon à former des tranches de fromage généralement rectangulaire.

L'invention va maintenant être décrite de façon plus précise mais non limitative, en regard des figures annexées, dans lesquelles :
- la figure 1 est une vue schématique de côté d'un premier mode de réalisation d'un dispositif de fabrication de tranches de fromage malléable, présentant des motifs en creux ;
- la figure 2 est une vue partielle de la surface d'un dispositif de moulage de tranches de fromage malléable, présentant des motifs en creux ;
- la figure 3 est une vue schématique d'un deuxième mode de réalisation d'un dispositif de fabrication de tranches de fromage malléable présentant des motifs en creux ;
- la figure 4 est une vue schématique d'un troisième mode de réalisation d'un dispositif de fabrication de tranches de fromage malléable présentant des motifs en creux ou des ouvertures ;
- la figure 5 est une vue schématique de l'empreinte du cylindre de montage du dispositif de la figure 4.

Pour fabriquer du fromage en tranche, à partir d'une pâte malléable de fromage ayant des qualités organoleptiques proches des qualités organoleptiques de fromages naturels, on prépare une pâte de fromage malléable adaptée par un procédé que l'on décrira plus loin, puis on moule cette pâte de fromage malléable à l'aide d'une installation de fabrication de tranches de fromage malléable que l'on va décrire maintenant.

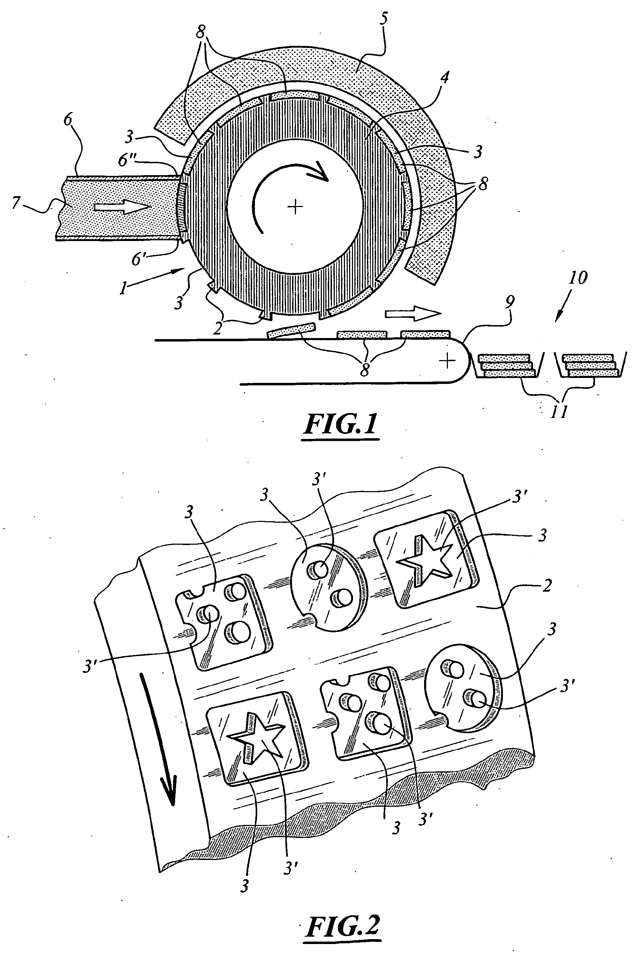

Dans un premier mode de réalisation, représenté à la figure 1, l'installation de fabrication de tranches de fromage, comporte tout d'abord un tambour de moulage, repéré généralement par 1, dont l'axe est horizontal et qui est entraîné en rotation dans le sens de la flèche par un moteur non représenté.

Le tambour de moulage 1 comporte à sa surface 2, une pluralité d'alvéoles 3 destinées à recevoir du fromage pour former des ébauches de tranches de fromage. Les alvéoles 3 sont représentées agrandies à la figure 2. Les alvéoles 3, qui peuvent être de forme diverses, sont réparties sous forme de rangées parallèles à une génératrice de la surface du tambour de moulage sur l'ensemble de la surface.

Les alvéoles 3 comportent à l'intérieur des éléments en saillie 3' tels que des plots destinés à former des motifs en creux dans les tranches de fromage, et éventuellement à créer des ouvertures. Ces motifs peuvent avoir des formes variées, par exemple circulaires, ou en étoile, ou de tout autre forme, par exemple en forme de fleur ou d'animal ou de croissant de lune ou tout autre forme que l'homme du métier pourra imaginer.

Le tambour de moulage 3 comporte un moyen de refroidissement constitué d'une double paroi 4 alimentée en un fluide de refroidissement tel que de l'eau glacée, afin de refroidir les ébauches de tranches de fromage pendant leur moulage sur le tambour de moulage.

Une partie de la périphérie du tambour de moulage est entourée par un deuxième moyen de refroidissement 5 constitué d'un ensemble de buses de soufflage de gaz de refroidissement pouvant être de l'air ou tout autre gaz neutre tel que, par exemple, de l'azote, qui est réfrigéré de façon à avoir un effet réfrigérant important.

L'installation de moulage comporte également un dispositif 6 d'approvisionnement en pâte de fromage malléable destiné à injecter de la pâte à fromage dans les alvéoles de la surface du tambour de moulage. Ce dispositif est par exemple une vis sans fin munie d'un dispositif dit de « bourrage/refus » tel que, lorsque l'écoulement de la pâte contenue dans le dispositif ne rencontre pas d'opposition, l'écoulement se fait naturellement, et lorsque cet écoulement rencontre une difficulté en particulier parce que l'alvéole en cours de remplissage est pleine, le système interrompt son injection de pâte malléable.

Le dispositif d'approvisionnement ou d'injection de pâte malléable de fromage est disposé en regard de la surface du tambour de moulage de façon à pouvoir approvisionner l'ensemble des alvéoles de la surface de moulage lorsque celles-ci passent devant l'ouverture 6' du dispositif 6 d'injection de pâte malléable.

- L'ouverture 6' du dispositif d'injection de pâte malléable comporte des bords 6"qui sont situés à proximité de la surface du tambour du moulage et conformés de façon à assurer un raclage de la pâte de fromage contenue dans les alvéoles et ainsi, assurer que les alvéoles contiennent juste la quantité de pâte nécessaire pour former une tranche de fromage dont la surface externe est bien lisse.

Comme on le voit sur la figure, le moyen d'injection de pâte malléable de fromage 6 contient de la pâte malléable de fromage 7 qui est injectée dans les alvéoles 3 où elle forme des ébauches de tranche 8, réparties sur la périphérie du tambour de moulage entre le point d'injection et un point d'extraction située au point bas du tambour.

Un tapis roulant 9 est disposé en dessous du tambour de moulage. Ce tapis roulant 9 destiné à recevoir les tranches de fromage 8 qui sont détachées du tambour de moulage par un moyen d'extraction, non représenté sur la figure, constitué par exemple d'un jet d'air comprimé débouchant sur le fond des alvéoles 3.

Le tapis roulant est également destiné à transférer les tranches de fromage vers un poste de conditionnement 10 dans lequel les tranches de fromage sont par exemple empilées dans des barquettes 11.

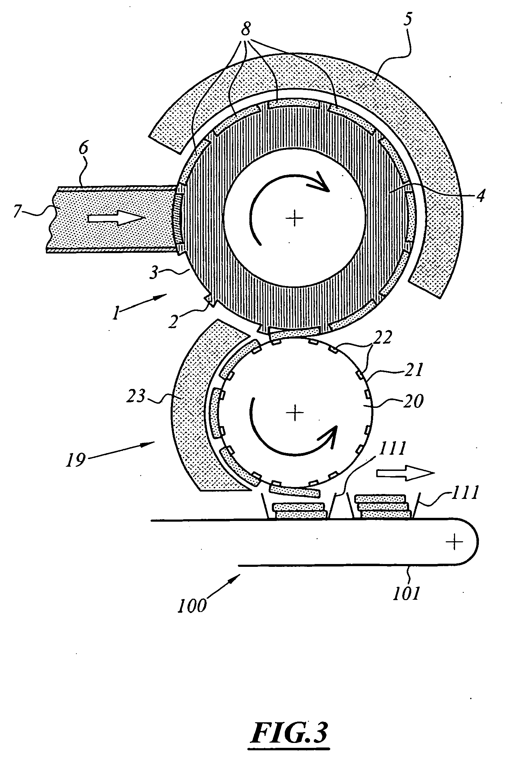

Dans un deuxième mode de réalisation de l'installation de fabrication de tranches de fromage, représenté à la figure 3, le tambour de moulage et les moyens d'approvisionnement en pâte de moulage sont identiques au mode de réalisation précédent, et donc on ne le décrira pas, bien qu'ils soient représentés et qu'ils portent les mêmes repères que les éléments correspondants de la figure 1.

Le deuxième mode de réalisation se distingue du précédent par le moyen d'extraction et de transport des tranches de fromage vers le poste de conditionnement. Dans ce deuxième mode de réalisation, l'extraction et le transport du fromage est réalisé à l'aide d'un dispositif, repéré généralement par 19, constitué d'un tambour rotatif 20 d'extraction et de transport entraîné en rotation en sens inverse du tambour rotatif de moulage 1 comme l'indique la flèche. Le tambour d'extraction et de transport 20 d'axe parallèle à celui du tambour de moulage a une surface externe 21 tangente, ou quasiment tangente, à la surface externe du cylindre de moulage 1.

Cette surface externe du tambour d'extraction et de transport 20, comporte une pluralité d'ouvertures 22 reliées à un moyen d'aspiration ou de soufflage d'air, non représenté, permettant d'une part d'aspirer les tranches de fromage lorsque ces ouvertures viennent en regard des tranches de fromage apportées par le tambour de moulage 1 pour les transférer du tambour de moulage au tambour d'extraction, et d'autre part, de détacher les tranches de fromage par soufflage d'air comprimé, lorsque les tranches de fromage transportées par le tambour d'extraction et de transport 20 arrivent en regard du poste de conditionnement, repéré généralement par 100. Ce poste de conditionnement 100 est constitué d'un tapis roulant 101 sur lequel sont disposées des barquettes 111, qui peuvent être remplies chacune d'une pluralité de tranches de fromage.

Dans ce mode de réalisation, on comprend que, alors que le tambour de moulage 1 et le tambour d'extraction et de transport 20 tournent de façon continue, le tapis roulant 101 de transport des barquettes 111 avance de façon discontinue de telle sorte qu'une barquette 111 reste en regard du tambour d'extraction et de transport 20, un certain temps. Pendant ce temps, la barquette est remplie d'un certain nombre de tranches de fromage. Lorsque la barquette est remplie, le tapis roulant avance d'un cran et une nouvelle barquette vide est amenée sous le tambour d'extraction.

Ces deux dispositifs permettent de fabriquer de façon continue des tranches de fromage à partir d'une pâte de fromage malléable en les conditionnant sous tout mode de conditionnement possible, par exemple dans des barquettes fermées par des opercules, ou dans des sachets, ou dans tout autre moyen de conditionnement, chaque tranche pouvant être éventuellement préemballée avant d'être disposée dans une barquette.

Sur les machines qui viennent d'être décrites, les moyens d'extraction sont des moyens d'extraction par aspiration d'air ou par soufflage d'air comprimé, mais d'autres moyens d'extraction sont envisageables, par exemple des moyens d'extraction par l'intermédiaire de raclette ou tout autre dispositif mécanique connu de l'homme du métier.

En outre, dans le deuxième mode de réalisation, un moyen de refroidissement 23, constitué d'un ensemble de buses de soufflage de gaz de refroidissement tel que de l'azote ou de l'air, est associé au tambour d'extraction et de transport 20, de façon à compléter le refroidissement réalisé sur le tambour de moulage.

On notera que dans le premier mode de réalisation, il est aussi possible de prévoir un refroidissement complémentaire des tranches de fromage lorsque celles-ci sont transportées par le tapis roulant 9. Dans ce cas, le refroidissement peut être réalisé soit en faisant passer les tranches de fromage dans un tunnel de refroidissement, connu en lui-même de l'homme du métier, soit en disposant sous le tapis roulant des moyens de refroidissement tels que, par exemple, des radiateurs avec une circulation d'eau glacé, ou tout autre dispositif.

On va maintenant décrire plus en détail les procédés de préparation de la pâte de fromage et le traitement de la pâte de fromage jusqu'à son emballage.

Tout d'abord, pour réaliser la pâte de fromage malléable susceptible d'être moulé tout en ayant des qualités organoleptique proches de celle du fromage naturel, on commence par réaliser une matière première de départ constituée de fromages naturels qui sont broyés pour être découpés en brin ou morceaux de dimensions comprises, de préférence, entre 1,5 et 5 mm. Ces fromages sont par exemple du Maasdam, de l'emmental, du gruyère, ou toute catégorie de fromage naturel, obtenu à partir du lait selon des techniques traditionnelles utilisées dans la fabrication des fromages.

On peut également utiliser des fromages naturels fabriqués à partir de produits dans lesquels sont incorporés de la matière grasse végétale en substitution totale ou partielle de la matière grasse animale.

On peut, enfin, partir d'un fromage seul ou d'un mélange de fromages en adaptant les proportions des fromages de telle sorte que les caractéristiques organoleptiques des tranches obtenues en final soient proches des caractéristiques organoleptiques du fromage majoritaire dans le mélange.

Ce mélange broyé subit ensuite un traitement thermique et mécanique modéré du type pétrissage, à une température inférieure à 85°C de préférence, comprise entre 45°C et 65°C.

De façon préférentielle, la montée en température de la matière première se fait par injection directe de vapeur de telle sorte que la température monte à une vitesse comprise entre 0,2°C/s et 0,6°C/s, et de préférence à la vitesse d'environ 0,4°C/s.

Ce traitement thermique est effectué dans une installation qui assure un cisaillement de la pâte. Cette installation est par exemple un cutter comme en lui-même de l'homme du métier, tournant à une vitesse comprise entre 350 t/mn et 650 t/mn, et de préférence à la vitesse de 500t/mn.

Le traitement thermique est réalisé sur de la matière première constituée principalement de fromage naturel broyé. Mais, la matière première peut également être obtenue en ajoutant au fromage naturel broyé, de l'eau ou des matières premières fromagères complémentaires. Ces additions d'eau et de matière première fromagère peuvent être effectuées soit avant la réalisation du traitement thermique et mécanique qui vient d'être décrit, soit pendant ce traitement thermique ou mécanique de la pâte.

Les quantités d'eau et de matière première sont adaptées pour ne pas dénaturer excessivement, c'est-à-dire conserver une texture et des qualités organoleptiques (arôme, goût) proches de celles du fromage naturel principal, ce dernier devant représenter au moins 60% de la formule. En particulier, la quantité d'eau est de préférence comprise entre 7% et 20% en poids, par rapport au poids de la matière première fromage naturel de départ.

Les autres matières premières qui peuvent être utilisées sont par exemple des concentrés de protéine laitière, en quantité inférieure à 10% en poids par rapport au poids de matière première de fromage naturel d'origine ; des poudres de lait ou de lactosérum en teneur de préférence inférieure à 10% en poids ; des caillés de fromage non affinés, en des teneurs pouvant être comprises de préférence entre 10% et 40% en poids ; du fromage fondu en des teneurs pouvant être comprises de préférence entre 10% et 40% en poids; des matières grasses d'origine laitière ou végétal, dans des teneurs comprises de préférence entre 5% et 60% en poids ; ou tout autre matière première fromagère connue de l'homme du métier.

On notera que les concentrés de poudre de lait ou de lactosérum peuvent être apportés sous forme de concentrés fermentés, par exemple par des bactéries lactiques ou par des graines de Kéfir ou par tout agent de fermentation utilisé dans l'industrie laitière.

En outre, on peut ajouter des ingrédients aromatiques sous forme d'éléments figurés. Ces éléments figurés que l'homme du métier connaît, peuvent être, notamment, des grains de cumin, des brisures de noix, des brisures de noisette, des herbes aromatiques, etc.

A la suite du traitement thermique et mécanique, la pâte obtenue est refroidie à une température comprise entre 30°C et 55°C, et de préférence entre 45°C et 55°C, afin d'obtenir une pâte malléable de type pâte à pain.

Cette pâte qui est fabriquée dans des installations connues en elle-même, est alors introduite dans le dispositif 6 d'injection dans la machine de moulage. Ce dispositif 6 apporte en continu du fromage en pâte malléable sur la surface du tambour de moulage 1, et ainsi remplit les alvéoles 3, de façon à former des ébauches de tranches 8.

Ces ébauches de tranches qui sont transportées par le tambour de moulage 1 jusqu'à la zone d'extraction sont refroidies afin d'être durcies, par les moyens de refroidissement qui ont été décrits précédemment, jusqu'à des températures inférieurs à 30°C et de préférence comprise entre 30°C et 2°C.

Ce refroidissement, jusqu'à une température faible, se fait soit complètement sur le tambour de moulage 1, soit partiellement sur le tambour de moulage, le complément étant effectué par exemple sur le tambour d'extraction et de transport 20, tel que représenté dans le deuxième mode de réalisation de l'installation, ou sur le tapis de transport 9 par des moyens de refroidissement associés au tapis de transport 9.

Les tranches ainsi amenées à température d'utilisation, sont alors conditionnées et emballées par des moyens connus de l'homme du métier dans le domaine de l'industrie fromagère, de façon à être expédiées.

On notera que les alvéoles 3 peuvent comporter des motifs en relief qui permettent de former des trous ou des ouvertures dans les tranches de fromages. Les alvéoles peuvent également comporter des motifs en relief moins importants destinés à engendrer des formes en creux dans les surfaces des tranches de fromage.

En outre, le fond de l'alvéole peut comporter des motifs destinés à donner à une surface de la tranche de fromage un aspect granuleux ou un toucher rugueux.

On va maintenant décrire une variante du procédé dans lequel on prépare une pâte fromagère comme dans les modes de réalisation précédents, et on la moule sur un tambour de moulage. Mais, dans cette variante, au lieu de mouler directement la pâte fromagère sous forme de tranches de forme généralement rectangulaire, on la moule sous forme d'une bande qu'on divise longitudinalement en une pluralité de rubans qu'on coupe transversalement pour former des tranches rectangulaires.

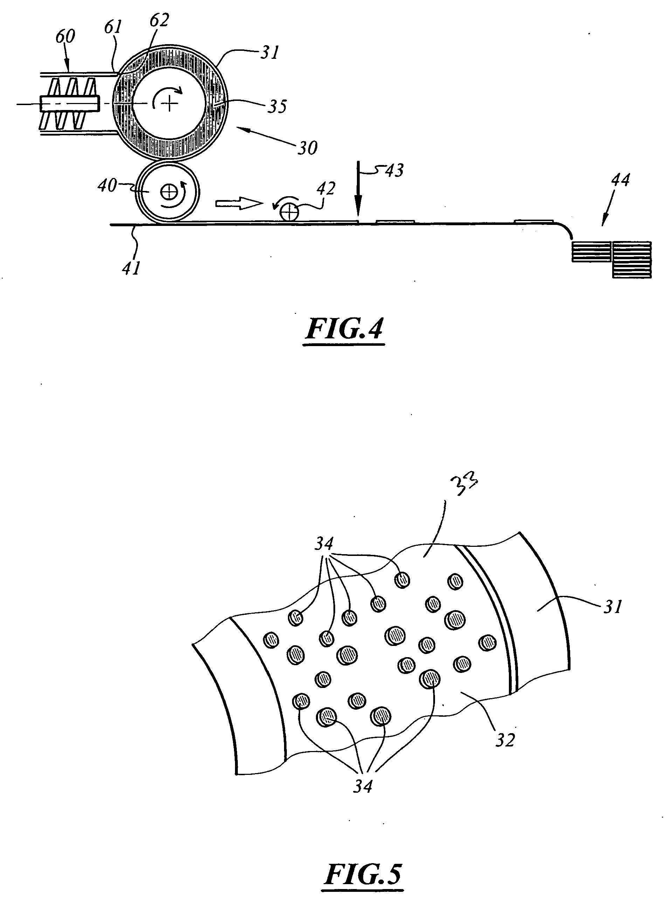

Comme cela est représenté aux figures 4 et 5, le dispositif comprend un tambour de moulage 30 comportant à sa surface périphérique 31, une empreinte en creux 32 annulaire, s'étendant sur toute la circonférence du tambour et dont la surface 33 comporte une pluralité de plots en saillie 34, destinés à former des ouvertures dans les tranches de fromage. Les plots peuvent avoir des formes très diverses, comme dans le premier mode de réalisation. L'empreinte s'étendant sur toute la périphérie du cylindre, elle est sans fin et permet de fabriquer de façon continue une bande de longueur quelconque. Le tambour de moulage comprend un moyen de refroidissement constitué d'une double paroi 35 parcourue par une circulation d'eau glacée.

Ce tambour de moulage est alimenté en fromage par un moyen d'injection 60 de pâte de fromage malléable. Le moyen d'injection 60 comporte une face avant ouverte 61 en regard du tambour de moulage, par laquelle la pâte fromagère est injectée dans l'empreinte en creux 32. La face avant 61 comporte au moins une lèvre 62 assurant le raclage de la pâte fromagère contenue dans l'empreinte de moulage.

Un tambour d'extraction et de transport 40 d'axe parallèle à celui du tambour de moulage est placé sous le tambour de moulage au contact, ou quasiment au contact de celui-ci, de façon à pouvoir entraîner la bande de fromage formée sur le tambour de moulage.

Le tambour d'extraction et de transport tourne en sens inverse du tambour de moulage et sa paroi externe est constituée d'une double enveloppe parcourue par une circulation d'eau glacée.

Un convoyeur à bande 41 est disposé sous le tambour d'extraction et de transport pour entraîner la bande de fromage et la faire passer sous un dispositif de coupe longitudinale 42 puis sous un dispositif de coupe transversale 43 et enfin jusqu'à une zone de conditionnement 44.

Les dispositifs de coupe peuvent utiliser les techniques de coupe mécanique (disques ou guillotines), de coupe par jet d'eau sous haute pression, par ultrasons ou par toute autre technique connue de l'homme du métier.

Avec un tel dispositif le fromage moulé est obtenu sous forme d'une bande comportant des trous. Cette bande est refendue sous forme de rubans qui sont sectionnés pour former des tranches. Les tranches sont conditionnées soit individuellement soit par lots dans des emballages étanches.

Ce procédé a l'avantage d'effectuer le dosage, la mise en forme, le refroidissement et le démoulage en une seule étape. Il permet d'obtenir des tranches conditionnées unitairement.

Il permet d'obtenir des formats variés, d'épaisseur variées, avec des trous de dimension et de forme contrôlés et adaptables et enfin de contrôler le poids des tranches.

Ce mode de réalisation se distingue des précédents par le moyen de découpe et de calibrage des tranches. En effet, dans les premiers modes de réalisation décrits, la découpe et le calibrage des tranches sont réalisés par l'empreinte de moulage elle-même qui est une alvéole ayant la forme et les dimensions d'une tranche, alors que, dans le mode de réalisation qui vient d'être décrit, la découpe et le calibrage des tranches sont effectués après le moulage.

Avec les premiers modes de réalisation, pour changer les dimensions des tranches, il est nécessaire de changer le tambour de moulage, alors qu'avec le mode de réalisation décrit en dernier, il suffit de modifier les réglages des dispositifs de découpe longitudinale ou transversale.

Le procédé tel qu'il vient d'être décrit à l'avantage de permettre de fabriquer des tranches de fromage ayant des qualités organoleptiques proches de celles des fromages naturels. Il permet également de fabriquer ces tranches de façon continue, en limitant les pertes de matière première, puisqu'il n'y a pratiquement pas de chutes, et que les excédants de pâte fromagère peuvent éventuellement être récupérés pour être réintroduits dans le circuit. Le procédé est très souple puisque les formes et les dimensions des tranches, ainsi que les motifs peuvent être modifiés en changeant les surfaces des tambours de moulage sans avoir à changer complètement l'installation, tout en ayant des tranches qui sont toutes calibrées avec des poids contrôlés de façon précise. On peut cependant faire varier le format à volonté et, éventuellement au cours d'une même fabrication, fabriquer des tranches de format divers, ayant même des motifs divers.

Enfin, le procédé et le dispositif permettent de fabriquer des tranches de fromage présentant des ouvertures quelque soit la nature du fromage d'origine. En particulier, il n'est absolument pas nécessaire de partir de fromages qui comportent naturellement des ouvertures pour pouvoir réaliser des tranches de fromages comportant des ouvertures.

Afin de déterminer si le fromage obtenu a des qualités organoleptiques suffisamment proches de celles du fromage naturel de référence qui intervient pour au moins 60% dans la formule, on soumet des échantillons du fromage obtenu par le procédé selon l'invention et des échantillons de fromage de référence à un jury de dégustation composé de plusieurs experts, par exemple de 10 à 12 experts. On demande aux experts de faire une dégustation en aveugle et de noter sur une échelle de notation, par exemple de 1 à 5 ou de 1 à 10, un ou plusieurs échantillon de fromage selon l'invention et un ou plusieurs échantillons de fromage de référence. On fait la moyenne des notes obtenues par chacun des types de fromage et on considère qu'ils sont suffisamment proches si l'écart des moyennes reste inférieure à une fraction de l'étendue de l'échelle de notation, par exemple moins de 20% ou mieux moins de 10%. Ce qui correspond à un écart inférieur à 1 point ou 0,5 point respectivement, pour une échelle de 1 à 5. L'homme du métier sait mettre en place de tels tests comparatifs.

## Revendications

1. Procédé pour fabriquer du fromage en tranche, **caractérisé en ce qu'**on prépare une pâte de fromage malléable, on injecte la pâte de fromage malléable sur un dispositif de moulage (1, 30) mobile comportant à sa surface au moins une empreinte de moulage (3, 32) en creux comprenant au moins un plot en saillie (3', 34), on racle la pâte de fromage à la surface de l'au moins une empreinte, de façon à former une tranche ou une bande comportant au moins un motif en creux pouvant être une ouverture, on fait durcir la tranche ou la bande, on l'éjecte du dispositif de moulage, éventuellement on la découpe et on la conditionne.

2. Procédé selon la revendication 1, **caractérisé en ce que** la pâte de fromage malléable est chaude, et **en ce que** pour durcir la tranche avant de la conditionner, on la refroidit jusqu'à une température inférieure à 30°C, le refroidissement étant réalisé, au moins partiellement, lorsque la tranche est encore sur le dispositif de moulage, et étant terminé éventuellement après avoir éjecté la tranche de fromage du dispositif de moulage, pendant qu'on la transporte pour la conditionner.

3. Procédé selon la revendication 2, **caractérisé en ce que** le refroidissement est effectué par au moins un des moyens consistant à refroidir la paroi du dispositif de moulage en contact avec la tranche de fromage par circulation d'un fluide de refroidissement, à souffler depuis l'extérieur du dispositif de moulage un gaz froid tel que de l'air froid ou à faire circuler la tranche de fromage dans un tunnel de refroidissement.

4. Procédé selon l'une quelconque des revendications précédentes, **caractérisé en ce que** le dispositif de moulage est un tambour rotatif (1) comportant à sa surface au moins une alvéole (3) constituant une empreinte en creux en forme de tranche.

5. Procédé selon la revendication 4, **caractérisé en ce que** le procédé est continu et **en ce que** le dispositif de moulage comporte une pluralité d'alvéoles identiques ou différentes.

6. Procédé selon l'une quelconque des revendications 1 à 3, **caractérisé en ce que** le dispositif de moulage est un tambour rotatif (30) **en ce que** l'empreinte de moulage est une empreinte en creux (32) annulaire s'étendant sur toute la circonférence du tambour et dont la surface comprend des plots en saillie, et **en ce que** le fromage est formé sous forme de bande.

7. Procédé selon la revendication 6, **caractérisé en ce que** après refroidissement de la bande on la découpe transversalement et éventuellement longitudinalement, pour former des tranches de forme généralement rectangulaire.

8. Procédé selon l'une quelconque des revendications 1 à 7, **caractérisé en ce que** la pâte de fromage malléable est injectée à l'aide d'une vis doseuse (6, 60).

9. Procédé selon l'une quelconque des revendications précédentes, **caractérisé en ce qu'**on conditionne les tranches de fromage en les disposant dans un récipient adapté tel qu'une barquette ou un sachet, éventuellement après les avoir emballées individuellement.

10. Procédé selon l'une quelconque des revendications 1 à 9, **caractérisé en ce que**, pour préparer la pâte de fromage malléable, on effectue un traitement thermique et mécanique modéré du type pétrissage à une température comprise entre 80°C et 30°C d'une charge constituée d'au moins un fromage naturel divisé en brins ou morceaux, éventuellement d'eau et éventuellement d'une ou plusieurs matières premières complémentaires, l'eau et les matières premières complémentaires étant ajoutés avant ou pendant le traitement thermique et mécanique, et **en ce qu'**on refroidit la pâte à une température comprise entre 30°C et 55°C.

11. Procédé selon la revendication 10, **caractérisé en ce que** la quantité d'eau ajoutée est inférieure à 20% et de préférence supérieure à 7% en poids de la quantité de fromage naturel utilisée.

12. Procédé selon la revendication 10 ou la revendication 11, **caractérisé en ce que** les éventuelles matières premières complémentaires sont prises parmi les matières premières suivantes avec les propositions suivantes, en poids par rapport au poids de fromage naturels : concentré de protéines laitières, moins de 10% ; poudres de lait ou de lactosérum, moins de 10% ; caillés de fromages non affinés, jusqu'à 40% et de préférence plus de 10% ; fromage fondu jusqu'à 40% et de préférence plus de 10% ; matières grasses d'origine laitière ou végétale, jusqu'à 60% et de préférence plus de 5% ; les concentrés et poudres de lait ou de lactosérum pouvant être apportés sous forme de concentrés fermentés.

13. Procédé selon l'une quelconque des revendications 10 à 12, **caractérisé en ce que** le traitement thermique et mécanique est fait par chauffage par injection directe de vapeur à une vitesse de chauffage comprise entre 0,2°C/s et 0,6°C/s et **en ce que** le traitement mécanique est fait par cisaillement dans un dispositif du type cutter tournant à une vitesse comprise entre 350 et 650 tours/minute.

14. Produit fromager obtenu par traitement thermique au dessous de 85°C et pétrissage d'une matière première fromagère constituée d'un ou plusieurs fromages naturels broyés, éventuellement additionnés d'au plus 20% en poids d'eau, d'au plus 10% en poids de protéines laitières, d'au plus 10% en poids de poudre de lait et/ou de lactosérum, d'au plus 40% en poids de caillés de fromage non affiné, d'au plus 40% en poids de fromage fondu, d'au plus 50% de matières grasses d'origine laitière ou végétale, les pourcentages en poids des matières ajoutées étant déterminées par rapport au poids de fromages naturels broyés, **caractérisé en ce qu'**il se présente sous forme de tranches comportant au moins un motif en creux ou sous forme d'ouverture, et **en ce qu'**il contient des ingrédients aromatiques sous forme d'éléments figurés.

15. Dispositif pour la mise en oeuvre du procédé selon l'une quelconque des revendications 1 à 13, **caractérisé en ce qu'**il comprend un dispositif de moulage constitué d'un tambour de moulage (1, 30) entraîné en rotation, dont la surface (2, 31) comporte au moins une empreinte de moulage (3, 32) en creux, comportant au moins un plot (3', 34) en saillie, d'au moins d'un moyen de refroidissement (4, 5, 35) associé au tambour de moulage, d'un moyen d'injection (6, 60) de pâte malléable débouchant en regard de la surface du tambour de moulage de façon à pouvoir alimenter en pâte malléable l'empreinte de moulage prévues à la surface du tambour de moulage et un moyen (6', 62) de raclage de la surface du tambour du moulage, et un moyen d'extraction et de transport (9, 19, 41) des tranches de fromage vers une zone de conditionnement (10, 44, 100).

16. Dispositif selon la revendication 15, **caractérisé en ce que** le moyen d'injection (6, 60) de pâte malléable comporte une vis doseuse.

17. Dispositif selon la revendication 15 ou la revendication 16, **caractérisé en ce que** un moyen de refroidissement (4, 35) associé au tambour de moulage (1, 30) comprend une circulation de fluide de refroidissement tel que de l'eau glacée circulant dans le tambour au voisinage de la surface.

18. Dispositif selon la revendication 15 ou la revendication 16, **caractérisé en ce que** un moyen de refroidissement (5) associé au tambour de moulage (1) est un soufflage d'un gaz froid tel que de l'air froid sur la surface extérieure du tambour de moulage.

19. Dispositif selon l'une quelconque des revendications 15 à 18, **caractérisé en ce que** le moyen d'extraction et de transport des tranches ou de la bande de fromage vers une zone de conditionnement comprend un tambour d'extraction (20, 40) parallèle au tambour de moulage, dont la surface externe est tangente à l'enveloppe externe du cylindre de moulage, entraîné en rotation en sens inverse du sens de rotation du tambour de moulage.

20. Dispositif selon la revendication 19, **caractérisé en ce que** le moyen (19) d'extraction et de transport des tranches comporte des moyens tels que des moyens d'aspiration (22), pour détacher les tranches de fromage de la surface du tambour de moulage, pour maintenir les tranches de fromage sur le tambour d'extraction et pour les éjecter en regard de la zone de conditionnement (100).

21. Dispositif selon la revendication 20, **caractérisé en ce qu'**il comprend un moyen de refroidissement (23), par exemple du type soufflage de gaz froid, associé au tambour d'extraction.

22. Dispositif selon l'une quelconque des revendications 15 à 19, **caractérisé en ce que** le moyen d'extraction et de transport des tranches de fromages vers une zone de conditionnement comprend un tapis roulant (9) disposé sous le tambour de moulage et **en ce qu'**il est prévu un moyen pour détacher les tranches de fromage du tambour de moulage au droit du tapis roulant, tel qu'un racloir ou un soufflage d'air comprimé dans le fond des alvéoles du cylindre de moulage.

23. Dispositif selon la revendication 22, **caractérisé en ce qu'**il comprend, en outre, un moyen de refroidissement associé au moyen d'extraction et de transport, tel qu'un tunnel réfrigérant dans lequel le tapis roulant circule, ou un moyen de réfrigération disposé sous le tapis roulant.

24. Dispositif selon la revendication 15, **caractérisé en ce que** l'empreinte du moulage (3) est constituée d'au moins une alvéole.

25. Dispositif selon la revendication 15, **caractérisé en ce que** l'empreinte de moulage (32) est une empreinte circulaire s'étendant sur toute la circonférence du tambour, et **en ce que** le dispositif comprend des moyens (43) de découpe transversale et éventuellement des moyens (42) de découpe longitudinale d'une bande de fromage.

## Patentansprüche

1. Verfahren zur Herstellung von Schnittkäse, **dadurch gekennzeichnet, dass** eine formbare Käsemasse zubereitet wird, die formbare Käsemasse in eine bewegbare Formvorrichtung (1, 30) eingespritzt wird, welche auf ihrer Oberfläche mindestens eine hohle Formvertiefung (3, 32) aufweist, welche mindestens einen Vorsprung (3', 34) aufweist, die Käsemasse auf der Oberfläche der mindestens einen Vertiefung abgeschabt wird, um eine Scheibe oder ein Band zu bilden, welche/welches mindestens ein Vertiefungsmuster aufweist, welches ein Loch sein kann, die Scheibe oder das Band gehärtet wird, sie/es aus der Formvorrichtung ausgeworfen wird, gegebenenfalls sie/es geschnitten und verpackt wird.

2. Verfahren nach Anspruch 1, **dadurch gekennzeichnet, dass** die formbare Käsemasse warm ist, und dass sie bis zu einer Temperatur von weniger als 30 °C gekühlt wird, um die Scheibe vor der Verpackung zu härten, wobei die Kühlung mindestens teilweise durchgeführt wird, wenn die Scheibe noch auf der Formvorrichtung ist, und gegebenenfalls abgeschlossen ist, nachdem die Käsescheibe aus der Formvorrichtung ausgeworfen wurde, wenn sie transportiert wird, um verpackt zu werden.

3. Verfahren nach Anspruch 2, **dadurch gekennzeichnet, dass** die Kühlung durch mindestens ein der Mittel durchgeführt wird, bestehend aus der Kühlung der Wand der Formvorrichtung, welche in Kontakt mit der Käsescheibe ist, durch Zirkulation eines Kühlmittels, dem Blasen eines kalten Gases wie kalter Luft von außerhalb der Formvorrichtung oder dem Umlaufbringen der Käsescheibe in einen Kühltunnel.

4. Verfahren nach einem der vorhergehenden Ansprüche, **dadurch gekennzeichnet, dass** die Formvorrichtung eine Drehtrommel (1) ist, welche auf ihrer Oberfläche mindestens eine Vertiefung (3) aufweist, woraus eine hohle Vertiefung in Form einer Scheibe besteht.

5. Verfahren nach Anspruch 4, **dadurch gekennzeichnet, dass** das Verfahren kontinuierlich ist, und dass die Formvorrichtung eine Vielzahl von identischen oder unterschiedlichen Vertiefungen aufweist.

6. Verfahren nach einem der Ansprüche 1 bis 3, **dadurch gekennzeichnet, dass** die Formvorrichtung eine Drehtrommel (30) ist, dass die Formvertiefung eine ringförmige hohle Vertiefung (32) ist, welche sich über den ganzen Umfang der Trommel erstreckt und deren Oberfläche Vorsprünge aufweist, und dass der Käse in Form eines Bands gebildet wird.

7. Verfahren nach Anspruch 6, **dadurch gekennzeichnet, dass** nach der Kühlung des Bands, es in der Querrichtung und gegebenenfalls in der Längsrichtung geschnitten wird, um Scheiben, welche eine allgemein rechteckige Form aufweisen, zu bilden.

8. Verfahren nach einem der Ansprüche 1 bis 7, **dadurch gekennzeichnet, dass** die formbare Käsemasse mittels einer Dosierschnecke (6, 60) eingespritzt wird.

9. Verfahren nach einem der vorhergehenden Ansprüche, **dadurch gekennzeichnet, dass** die Käsescheiben verpackt sind, indem sie in einen geeigneten Behälter, wie eine Schale oder einen Beutel, gelegt werden, gegebenenfalls nachdem sie einzeln verpackt wurden.

10. Verfahren nach einem der Ansprüche 1 bis 9, **dadurch gekennzeichnet, dass**, um die formbare Käsemasse zuzubereiten, eine milde thermische und mechanische Behandlung des Kneten-Typs einer Ladung, welche mindestens einen natürlichen in Fasern oder Stücken geteilten Käse, gegebenenfalls Wasser und gegebenenfalls ein oder mehrere komplementäres/n Ausgangsmaterial(ien) aufweist, bei einer Temperatur zwischen 80 °C und 30 °C durchgeführt wird, wobei das Wasser und die komplementären Ausgangsmaterialien vor oder nach der thermischen und mechanischen Behandlung hinzugefügt werden, und dass die Masse auf eine Temperatur zwischen 30 °C und 55 °C gekühlt wird.

11. Verfahren nach Anspruch 10, **dadurch gekennzeichnet, dass** die Menge an hinzugefügtem Wasser weniger als 20 Gewichts-% und vorzugsweise mehr als 7 Gewichts-% der Menge an verwendetem natürlichem Käse ist.

12. Verfahren nach Anspruch 10 oder Anspruch 11, **dadurch gekennzeichnet, dass** die gegebenenfalls komplementären Ausgangsmaterialien ausgewählt sind aus den folgenden Ausgangsmaterialien mit den folgenden Vorschlägen bezüglich des Gewichts bezogen auf das Gewicht von natürlichem Käse: Milchproteinkonzentrat, weniger als 10% ; Milch- oder Molke-Pulvern, weniger als 10%; Quark von nichtgereiftem Käse, bis zu 40% und vorzugsweise mehr als 10%; Schmelzkäse bis zu 40% und vorzugsweise mehr als 10%; Milchfett oder Fett aus pflanzlicher Herkunft, bis zu 60% und vorzugsweise mehr als 5%; wobei die Konzentrate und Milch- oder Molke-Pulver in Form von fermentierten Konzentraten aufgebracht werden können.

13. Verfahren nach einem der Ansprüche 10 bis 12, **dadurch gekennzeichnet, dass** die thermische und mechanische Behandlung durch Erwärmen durch direkte Dampfeinspritzung bei einer Erwärmungsrate zwischen 0,2 °C/s und 0,6 °C/s durchgeführt wird, und dadurch, dass die mechanische Behandlung durch Scherung in einer Vorrichtung des Typs Cutter durchgeführt wird, welcher sich mit einer Geschwindigkeit zwischen 350 und 650 Umdrehungen/min dreht.

14. Käseprodukt erhaltend durch thermische Behandlung bei weniger als 85 °C und Kneten eines Käse-Ausgangsmaterials, aufweisend einen oder mehrere natürliche(n) zerkleinerte(n) Käse, gegebenenfalls mit Zusatz von höchstens 20 Gewicht-% Wasser, höchstens 10 Gewicht-% Milchproteinen, höchstens 10 Gewicht-% Milch- und / oder Molke-Pulver, höchstens 40 Gewichts-% Quark von nicht-gereiftem Käse, höchstens 40 Gewichts-% Schmelzkäse, höchstens 50% Milchfett oder Fett aus pflanzlicher Herkunft, wobei die Gewichtsprozente der hinzugefügten Materialien im Bezug auf das Gewicht des zerkleinerten natürlichen Käse bestimmt sind, **dadurch gekennzeichnet, dass** es in Form von Scheiben vorliegt, die mindestens ein Muster mit Vertiefungen oder in Form eines Lochs aufweisen, und dass es aromatische Zutäte in Form von figurativen Elementen enthält.

15. Vorrichtung zur Durchführung des Verfahrens nach einem der Ansprüche 1 bis 13, **dadurch gekennzeichnet, dass** sie aufweist eine Formvorrichtung, welche eine Formtrommel (1, 30), welche in Drehung angetrieben wird, deren Oberfläche (2, 31) mindestens eine hohle Formvertiefung (3, 32) aufweist, welche mindestens einen Vorsprung (3', 34) aufweist, mindestens ein Mittel zur Kühlung (4, 5, 35), welches mit der Formtrommel verbunden ist, ein Mittel zur Einspritzung (6, 60) von formbarer Masse, welches sich zu der Oberfläche der Formtrommel öffnet, um der Formvorrichtung, welche auf der Oberfläche der Formtrommel angesehen ist, die formbare Masse zuführen zu können, aufweist, und ein Mittel (6', 62) zur Abschabung der Oberfläche der Formtrommel, und ein Mittel zur Extraktion und zum Transportieren (9, 19, 41) der Käsescheiben in einen Verpackungsbereich (10, 44, 100).

16. Vorrichtung nach Anspruch 15, **dadurch gekennzeichnet, dass** das Mittel zur Einspritzung (6, 60) der formbaren Masse eine Dosierschnecke aufweist.

17. Vorrichtung nach Anspruch 15 oder Anspruch 16, **dadurch gekennzeichnet, dass** ein Mittel zur Kühlung (4, 35), welches mit der Formtrommel (1, 30) verbunden ist, eine Zirkulation eines Kühlmittels wie gekühltes Wasser, welches in die Trommel in der Nähe ihrer Oberfläche zirkuliert, aufweist.

18. Vorrichtung nach Anspruch 15 oder Anspruch 16, **dadurch gekennzeichnet, dass** ein Mittel zur Kühlung (5), welches mit der Formtrommel (1) verbunden ist, ein Blasen eines kalten Gases wie kalter Luft auf der äußeren Oberfläche der Formtrommel ist.

19. Vorrichtung nach einem der Ansprüche 15 bis 18, **dadurch gekennzeichnet, dass** das Mittel zur Extraktion und zum Transportieren der Käsescheiben oder des Käsebands in einen Verpackungsbereich eine parallel zu der Formtrommel angeordnete Trommel zur Extraktion (20, 40) aufweist, deren äußere Oberfläche an der Außenfläche der Formtrommel tangiert, welche in Drehung angetrieben wird, welche in Gegenrichtung zur Drehrichtung der Formtrommel ist.

20. Vorrichtung nach Anspruch 19, **dadurch gekennzeichnet, dass** das Mittel (19) zur Extraktion und zum Transportieren der Scheiben Mittel wie Mittel zum Saugen (22) aufweist, um die Käsescheiben von der Oberfläche der Formtrommel abzulösen, um die Käsescheiben auf der Trommel zur Extraktion zu halten und sie gegenüber des Verpackungsbereichs (100) auszuwerfen.

21. Vorrichtung nach Anspruch 20, **dadurch gekennzeichnet, dass** sie ein Mittel zur Kühlung (23) aufweist, beispielsweise des Typs des Blasens eines kalten Gases, welches mit der Trommel zur Extraktion verbunden ist.

22. Vorrichtung nach einem der Ansprüche 15 bis 19, **dadurch gekennzeichnet, dass** das Mittel zur Extraktion und zum Transportieren der Käsescheiben in einen Verpackungsbereich ein Förderband (9) aufweist, welches unten der Formtrommel angeordnet ist, und dass ein Mittel zur Ablösung der Käsescheiben aus der Formtrommel auf das Förderband wie ein Schaber oder ein Blasen mittels Druckluft auf der Unterseite der Vertiefungen der Formtrommel vorgesehen ist.

23. Vorrichtung nach Anspruch 22, **dadurch gekennzeichnet, dass** sie zusätzlich aufweist ein Mittel zur Kühlung, welches mit dem Mittel zur Extraktion und zum Transportieren verbunden ist, wie einen Kühltunnel, in dem das Förderband umläuft, oder ein Mittel zur Kühlung, welches unten dem Förderband angeordnet ist.

24. Vorrichtung nach Anspruch 15, **dadurch gekennzeichnet, dass** die Formvertiefung (3) mindestens eine Vertiefung aufweist.

25. Vorrichtung nach Anspruch 15, **dadurch gekennzeichnet, dass** die Formvertiefung (32) eine ringförmige Vertiefung ist, welche sich über den ganzen Umfang der Trommel erstreckt, und dass die Vorrichtung Mittel (43) zum Schneiden in der Querrichtung und gegebenenfalls Mittel (42) zum Schneiden in der Längsrichtung eines Käsebands aufweist.

## Claims

1. Method of manufacturing cheese slices, **characterised in that** a malleable cheese dough is prepared, the malleable cheese dough is injected onto a moulding device (1, 30) having on its surface at least one hollow mould depression (3, 32) incorporating at least one protruding point (3', 34), the cheese dough on the surface of the at least one depression is scraped so as to form a slice or a strip incorporating at least one hollow motif which might be a cut-out, the slice or strip is allowed to set, it is ejected from the moulding device, it is optionally cut and it is packaged.

2. Method as claimed in claim 1, **characterised in that** the malleable cheese dough is hot and **in that** in order to set the slice prior to packaging, it is cooled to a temperature of less than 30°C, the cooling process being at least partially implemented whilst the slice is still on the moulding device, and optionally being completed, the cheese slice having been having ejected from the moulding device, whilst is it being conveyed for packaging.

3. Method as claimed in claim 2, **characterised in that** the cooling process is implemented by at least one of the means comprising cooling the wall of the moulding device in contact with the cheese slice by circulating a coolant, blowing a cold gas such as cold air from outside the moulding device or circulating the cheese slice through a cooling tunnel.

4. Method as claimed in any one of the preceding claims, **characterised in that** the moulding device is a rotating drum (1) having on its surface at least one alveolus (3) constituting a hollow depression in the shape of a slice.

5. Method as claimed in claim 4, **characterised in that** the method is continuous and **in that** the moulding device has a plurality of identical or different alveoli.

6. Method as claimed in any one of claims 1 to 3, **characterised in that** the moulding device is a rotating drum (30) and the mould depression is an annular hollow depression (32) extending around the entire circumference of the drum and the surface of which has protruding points, and **in that** the cheese is shaped in a strip shape.

7. Method as claimed in claim 6, **characterised in that** after cooling the strip, it is cut transversely and optionally longitudinally to form slices of a generally rectangular shape.

8. Method as claimed in any one of claims 1 to 7, **characterised in that** the malleable cheese dough is injected with the aid of a metering screw (6, 60).

9. Method as claimed in any one of the preceding claims, **characterised in that** the cheese slices are packaged by placing them in an appropriate receptacle such as a tray or a bag, optionally after having packaged them individually.

10. Method as claimed in any one of claims 1 to 9, **characterised in that** the malleable cheese dough is prepared by a moderated thermal and mechanical treatment of the type whereby a batch made up of at least one natural cheese broken into strands or pieces, optionally water and optionally one or more complementary raw materials is kneaded at a temperature of between 80°C and 30°C, the water and complementary raw materials being added before or during the thermal and mechanical treatment, and the dough is cooled to a temperature of between 30°C and 55°C.

11. Method as claimed in claim 10, **characterised in that** the quantity of water added is less than 20% and preferably greater than 7% by weight of the quantity of natural cheese used.

12. Method as claimed in claim 10 or claim 11, **characterised in that** the optional complementary raw materials are selected from the following raw materials in the following proportions by weight relative to the weight of natural cheese: dairy protein concentrate, less than 10%; milk or lactoserum powders, less than 10%; non-matured cheese curds, up to 40% and preferably more than 10%; processed cheese up to 40% and preferably more than 10%; dairy or vegetable fats, up to 60% and preferably more than 5%; it being possible to add the concentrates and milk and lactoserum powders in the form of fermented concentrates.

13. Method as claimed in any one of claims 10 to 12, **characterised in that** the thermal and mechanical treatment is implemented by a process of heating by direct steam injection at a heating rate of between 0.2°C/s and 0.6°C/s and **in that** the mechanical treatment is implemented by shearing in a device of the cutter type rotating at a speed of between 350 and 650 revolutions/minute.

14. Cheese product obtained by a thermal treatment below 85°C and kneading a cheese raw material made up of one or more crushed natural cheeses, to which are optionally added at most 20% by weight of water, at most 10% by weight of dairy proteins, at most 10% by weight of milk and/or lactoserum powder, at most 40% by weight of non-matured cheese curds, at most 40% by weight of processed cheese, at most 50% of dairy or vegetable fats, the percentages by weight of the added substances being determined relative to the weight of crushed natural cheeses, **characterised in that** it is in the form of slices incorporating at least one hollow or cut-out motif, and **in that** it contains aromatic ingredients in the form of loose ingredients.

15. Device for implementing the method as claimed in any one of claims 1 to 13, **characterised in that** it comprises a moulding device in the form of a moulding drum (1, 30) driven in rotation, the surface (2, 31) of which has at least one hollow mould depression (3, 32) incorporating at least one protruding point (3', 34), at least one cooling means (4, 5, 35) co-operating with the moulding drum, a malleable dough injecting means (6, 60) opening facing the surface of the moulding drum to enable the mould depression provided on the surface of the moulding drum to be supplied with malleable dough and a means (6', 62) for scraping the surface of the moulding drum, and a means (9, 19, 41) for extracting and conveying cheese slices to a packaging area (10, 44, 100).

16. Device as claimed in claim 15, **characterised in that** the malleable dough injecting means (6, 60) comprises a metering screw.

17. Device as claimed in claim 15 or claim 16, **characterised in that** a cooling means (4, 35) co-operating with the moulding drum (1, 30) comprises a circulation system for coolant such as chilled water circulating through the drum in the vicinity of the surface.

18. Device as claimed in claim 15 or claim 16, **characterised in that** a cooling means (5) co-operating with the moulding drum (1) is a means for blowing cold gas such as cold air onto the external surface of the moulding drum.

19. Device as claimed in any one of claims 15 to 18, **characterised in that** the means for extracting and conveying cheese slices or the strip of cheese to a packaging area comprises an extraction drum (20, 40) parallel with the moulding drum, the external surface of which is tangential to the external envelope of the moulding cylinder, driven in rotation in the direction of rotation opposite that of the moulding drum.

20. Device as claimed in claim 19, **characterised in that** the means (19) for extracting and conveying slices comprises means such as suction means (22) for detaching the cheese slices from the surface of the moulding drum in order to hold the cheese slices on the extraction drum and eject them facing the packaging zone (100).

21. Device as claimed in claim 20, **characterised in that** it comprises a cooling means (23), for example of the cold gas blower type, co-operating with the extraction drum.

22. Device as claimed in any one of claims 15 to 19, **characterised in that** the means for extracting and conveying cheese slices to a packaging area comprises a belt conveyor (9) disposed underneath the moulding drum and **in that** a means is provided for detaching the cheese slices from the moulding drum perpendicular to the belt conveyor, such as a scraper or a means for blowing compressed air into the base of the alveoli of the moulding cylinder.

23. Device as claimed in claim 22, **characterised in that** it further comprises a cooling means co-operating with the extraction and conveyor means, such as a cooling tunnel through which the belt conveyor circulates, or a refrigeration means disposed underneath the belt conveyor.

24. Device as claimed in claim 15, **characterised in that** the mould depression (3) comprises at least one alveolus.

25. Device as claimed in claim 15, **characterised in that** the mould depression (32) is a circular depression extending around the entire circumference of the drum, and **in that** the device comprises means (43) for transversely cutting and optionally means (42) for longitudinally cutting a strip of cheese.
